# EUROPÄISCHE PATENTSCHRIFT

(11) **EP 3 821 309 B1**
(45) Veröffentlichungstag und Bekanntmachung des Hinweises auf die Patenterteilung: **13.09.2023**
(21) Anmeldenummer: 19736675.0
(22) Anmeldetag: 03.07.2019
(51) Int. Cl.: G05B 19/418, G05B 17/02

(54) **VERFAHREN UND SYSTEM ZUR STEUERUNG DES MATERIALFLUSSES VON OBJEKTEN IN EINEM REALEN LAGER**
METHOD AND SYSTEM FOR CONTROLLING THE MATERIAL FLOW OF OBJECTS IN A REAL WAREHOUSE
PROCÉDÉ ET SYSTÈME DE COMMANDE DU FLUX DE MATÉRIAUX D'OBJETS DANS UN ENTREPÔT RÉEL

(30) Priorität: 10.07.2018 DE 102018116611
(43) Veröffentlichungstag der Anmeldung: 19.05.2021
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2019/067911
(87) Internationale Veröffentlichungsnummer: WO 2020/011628

(56) Entgegenhaltungen:
- EP-A1- 3 330 201
- US-A1- 2016 274 553
- US-B1- 9 102 055
- US-B1- 9 607 285

## Beschreibung

Die Erfindung betrifft ein Verfahren zur Steuerung eines realen Lagers, das fördertechnische Anlagen, automatisierte Maschinen und Personen umfasst, gemäß Anspruch 1.

In Anlagen mit automatisiertem Materialfluss und gleichzeitigem Personaleinsatz gehen von den eingesetzten Maschinen wie Regalbediengeräten, Förderern, autonomen Fahrzeugen, etc. durch die verschiedensten beweglichen Teile erhebliche Gefahren für Personen aus, die sich in deren unmittelbaren Bewegungsbereich befinden (im Wesentlichen Kollision und Scher-/Quetschkanten).

Um die einschlägigen Vorschriften einzuhalten, werden diese Maschinen heute individuell mit geeigneten Systemen abgesichert: z. B. durch Einzäunung mit sicheren Zugangseinrichtungen bei Regalbediengeräten und Sondermaschinen, Frei-Überwachung mit Lichtschranken und anderer Sensorik bei Arbeitsplätzen sowie Umgebungs-Überwachung mit Radar etc. bei autonomen Fahrzeugen.

Diese Systeme können jeweils nur einen begrenzten Bereich bzw. eine abgegrenzte Funktion absichern.

Die Sicherheitstechnik hat teilweise erhebliche Auswirkungen auf die Anlagennutzung. Für den Zugang werden viel größere Bereiche abgeschaltet als der Bereich, in dem sich eine Person tatsächlich befindet.

Wenn Sicherheitssysteme nur eine begrenzte Sichtweite haben, wird die Geschwindigkeit generell reduziert. Der technische Aufwand für die genannten Sicherheitseinrichtungen stellt einen nennenswerten Anteil an der Gesamtinvestition einer Anlage dar.

In der US 2014/0236555 A1 ist es offenbart, reale Daten aus einer Logistikanlage in ein virtuelles Modell dessen einfließen zu lassen, um die virtuelle Umgebung hinsichtlich des Förderflusses zu verbessern bzw. realistischer zu gestalten, um verbesserte Testergebnisse zu erhalten.

Aus dem Artikel "Decentralized Control of a Material Flow System Enabled by an Embedded Computer Vision System" (Communications Workshops (ICC), 2011 IEEE International Conference on, 20110605 IEEE - ISBN 978-1-61284-954-6; ISBN 1-61284-954-7) ist es ferner bekannt, auf Ebene der dezentralen Steuerungen kamerabasierte Objekterkennung mittels Marker einzusetzen. Aus der US 9 607 285 B1 ist ein halb manuelles Kommissionierverfahren bekannt, bei dem der Kommissionier von einem Wagen verfolgt wird. Um den Standort des Kommissioniers zu bestimmen, kann der Wagen mit einem Armband des Kommissioniers Daten austauschen. Damit der Wagen seine eigene Position bestimmen kann, erstellt der Wagen mit einer Bildaufnahmeeinrichtung Aufnahmen von Markierungen die in dem Warenhaus verteilt angeordnet sind.

Aufgabe der Erfindung ist es, eine Möglichkeit zu schaffen, die die Sicherheit des Personals trotz vereinfachtem Anlagendesign erlaubt und die Auswirkung der Sicherheitssysteme auf die Anlagenleistung zu minimieren und gleichzeitig den Aufwand für die entsprechenden Vorrichtungen zu verringern.

Diese Aufgabe wird durch das in Anspruch 1 wiedergegebene Verfahren gelöst. Erfindungsgemäß ist erkannt worden, dass, wenn eine Anlagensteuerung mit Vision- und Emulationsmodell erfolgt, es möglich ist, mittels eines virtuellen Modells des gesamten Lagers inklusive der installierten Fördertechnik, erweitert um im Gebäude befindliche Personen und automatisierte Maschinen, Bereiche als sicher oder frei zu erkennen und/oder mögliche Kollisionen oder sonstige Gefährdungen der Personen festzustellen. Aufgrund solcher Sicherheitseinstufungen werden entsprechende Steuerungsbefehle oder Schaltungen von Betriebsmodi (normal, langsam, stop) an die automatisierten Maschinen gesendet. Somit kann das Anlagendesign vereinfacht und zudem Platz eingespart werden. Auch kann so in gemischten Umgebungen, d.h. mit Personal und automatisierten Maschinen, insbesondere autonome Fahrzeuge wie AGV (automated guided vehicles), die Sicherheit des Personals trotz Anlagenvereinfachung ohne Anlagendurchsatzverringerung sichergestellt werden.

Es handelt sich also nicht um eine Simulierung oder Emulation, sondern um eine Virtualisierung. Es wird also im Gegensatz zur Emulation oder Simulation eine echte, real existierende Anlage im Rechner nachgebildet.

Bei dem erfindungsgemäßen Verfahren wird zur Steuerung eines realen Lagers, das fördertechnische Anlagen, automatisierte Maschinen und Personen umfasst, wozu in einem zentralen Rechner das reale Lager einschließlich fördertechnischen Anlagen, automatisierten Maschinen und Personen virtualisiert wird, wofür ein virtuelles Modell des Lagers inklusive der realen fördertechnischen Anlage, der automatisierten Maschinen und der Personen mit deren Abmessungen und deren Bewegungsparametern einschließlich der Aktoreneigenschaften hinterlegt ist, von den zu fördernden Objekten, automatisierten Maschinen und Personen in der fördertechnischen Anlage mittels Sensoren Bilder in vorgegebenen kurzen Zeitintervallen erfasst werden, aus den erfassten Bildern in dem zentralen Rechner mittels Bilderkennung die zu fördernden Objekte, automatisierten Maschinen und Personen identifiziert und deren Position zum Zeitpunkt der Bilderfassung in dem realen Lager bestimmt werden, und das virtuelle Modell laufend mit der Identifikation und Positionsbestimmung der Objekte in dem zentralen Rechner aktualisiert wird, so dass daraus ein virtualisiertes Echtzeit-Modell erzeugt wird, und die reale fördertechnische Anlage und/oder die automatisierten Maschinen mit Hilfe des virtualisierten Echtzeit-Modells zentral gesteuert werden, wobei eine Erzeugung von Materialflusssteuerungsbefehlen für die realen Aktoren zur Steuerung der Förderbewegung der jeweiligen fördertechnischen Anlagen und/oder automatisierten Maschinen erfolgt, um eine Gefährdung der Personen auszuschließen.

Mit anderen Worten, es werden an geeigneten Stellen Bild-Sensoren (z. B. Kameras) installiert, die die Fördergüter auf der Materialflusstechnik einschließlich der Regalbediengeräte und im Lagerregal sowie insbesondere die Arbeits- und Bewegungsbereiche der automatisierten Maschinen und Personen erfassen. Die Kameras übertragen die Bilder (Filme) in Echtzeit an einen Rechner. Über eine in Echtzeit ablaufende Bilderkennung werden nicht nur die Fördergüter erkannt und deren Position jederzeit exakt bestimmt und nachverfolgt, sondern auch die Positionen und Bewegungsabläufe der automatisierten Maschinen und Personen bestimmt und nachverfolgt.

Aufgrund dieser Informationen aktualisiert der Rechner ein virtuelles Modell der fördertechnischen Anlage einschließlich aller Fördergüter einschließlich deren Position auf der jeweiligen Fördertechnik und im Lagerregal sowie aller Informationen zu Positionen und Bewegungsabläufen der automatisierten Maschinen und Personen.

Das virtuelle Modell des Lagers einschließlich der Fördertechnik umfasst u.a. Abmessungen und Position der einzelnen Komponenten und deren Bewegungsparameter (Geschwindigkeit, Beschleunigung usw.). Somit können Gefährdungssituationen für die Personen im Lager vorhergesagt, erkannt und durch entsprechende Steuerung verhindert werden.

Der zentrale Rechner weist dementsprechend vorzugsweise ein Modul oder mehrere verschiedene Module auf:
- Schnittstelle zu den Bildsensoren zur Entgegennahme der Bilddaten;
- Aufbereitung und Verarbeitung der Bilddaten;
- Bilderkennung und nachgelagerte Identifikation und Positionsbestimmung und Bewegungsnachverfolgung der erkannten automatisierten Maschinen und/oder Personen;
- Virtualisiertes Echtzeitmodell des realen Lagers mit aktuellen Informationen aus der der Bilderkennung nachgelagerten Identifikation und Positionsbestimmung und Bewegungsnachverfolgung der erkannten automatisierten Maschinen und/oder Personen;
- Schnittstelle zu einem Lagerverwaltungsrechner zur Berücksichtigung der Informationen zu den automatisierten Maschinen und/oder Personen;
- Erzeugung von Materialflusssteuerungsbefehlen für die realen Aktoren zur Steuerung der Förderbewegung der jeweiligen automatisierten Maschinen, um eine Gefährdung der Personen auszuschließen.

Die Sensoren zur Bildaufnahme sind sinnvollerweise derart im Lager angeordnet, dass das Sichtfeld der Bildaufnahme gemeinsam von Personen und automatisierten Maschinen genutzte Bereiche beinhaltet.

Die Identifizierung der Fördergüter (welcher Artikel, welcher Auftrag) erfolgt ebenfalls durch die Auswertung der Kamerabilder. Somit steht im Rechner ein Echtzeit-Modell der Anlage einschließlich der Fördergüter mit allen Informationen, die zur Auslösung von Aktoren erforderlich sind, zur Verfügung. Der Rechner erzeugt aus diesen Informationen und den Anforderungen des Leitsystems (Lagerverwaltungsrechner, Routing, Zielvorgaben der Auftragsabarbeitung etc.) Befehle an die Aktorik, um den Materialfluss gezielt zu steuern.

Der zentrale Rechner weist dementsprechend vorzugsweise ein Modul oder mehrere verschiedene Module auf:
- Schnittstelle zu den Sensoren, Kameras zur Entgegennahme der Bilddaten;
- Aufbereitung und Verarbeitung der Bilddaten;
- Bilderkennung und nachgelagerte Identifikation und Positionsbestimmung der erkannten Fördergüter;

- Virtualisiertes Echtzeitmodell des realen Lagers mit aktuellen Informationen aus der der Bilderkennung nachgelagerten Identifikation und Positionsbestimmung der erkannten Fördergüter;
- Schnittstelle zum Lagerverwaltungsrechner zur Berücksichtigung des Routings und Zielvorgaben der Auftragsabarbeitung;
- Erzeugung von Materialflusssteuerungsbefehlen für die realen Aktoren zur Steuerung der Förderbewegung der jeweiligen Fördergüter zu deren Einlagerung, Lagerung, Auslagerung, ggf. Sortierung und Förderung zur Auftragsabarbeitung;

So benötigen automatisierte Maschinen, wie autonome Fahrzeuge, keine eigene Sensorik und können dennoch mit höheren Geschwindigkeiten betrieben werden. Sicherheitsbereiche z. B. bei Shuttlesystemen können verkleinert werden und Geräte nur bei Annäherung verlangsamt bzw. angehalten werden.

Zudem kann trotz Gefährdung ein eingeschränkter Betrieb aufrechterhalten werden, z. B. Lifte in einer Multishuttle-Wartungsebene laufen weiter und versorgen damit die anderen Wartungsebenen, wenn die Person weit genug entfernt ist, Shuttles dieser Wartungsebene arbeiten ebenfalls dort weiter, wo sich keine Person befindet.

An Kommissionierplätzen wird erfasst, wo sich Personen befinden, dementsprechend erfolgen Behälterwechsel oder ähnliches. Insbesondere an Kommissionierplätzen können auch detailliertere Informationen ausgewertet werden, z. B. ob ein Bediener gerade die Hand in einen Behälter hält und dieser deshalb nicht unter eine Kante gefördert werden darf.

Die Sicherheit des vorgeschlagenen Verfahrens kann weiter erhöht werden, wenn über redundante Systeme und ein Abgleich der gewonnenen Informationen / Interpretationen sowie über weitere Informationsquellen und Abgleich, z. B. Wärmebild, reduziertes Maß an konventioneller Sensorik, erfolgt. Falls dabei Widersprüche auftreten, müssen die Maschinen in dem betreffenden Bereich in einen eigensicheren Zustand versetzt werden (d. h. sicher ohne das vorgeschlagene Verfahren).

Mit der erfindungsgemäßen Steuerung über Bilderkennung können klassische Sensoren einschließlich Verkabelung eingespart werden. Die SPS Hardware und Software entfällt und wird durch den neuen Steuerrechner ersetzt.

Diesem stehen mehr Informationen zur Verfügung, mit deren Hilfe auch der Materialfluss optimiert werden kann. Beispielsweise sind das Ziel und die momentane Position jedes Fördergutes zu jeder Zeit bekannt, so dass die Lücken im Förderfluss optimiert und damit die Leistung einer Förderstrecke erhöht werden kann. Durch den Wegfall der traditionellen "SPS" und dadurch, dass der neue Steuerrechner auf der gleichen Plattform wie der Lagerverwaltungsrechner laufen kann (z. B. Java-Programmiersprache), entfällt eine erforderliche Fachdisziplin (SPS-Programmierer) mit den entsprechenden Vorteilen beim Personaleinsatz.

Als Sensoren eignen sich vorzugsweise IP-Kameras, auch Netzwerkkameras genannt.

Vorzugsweise sind die Sensoren zur Bildaufnahme auch derart im Lager angeordnet, dass das Sichtfeld der Bildaufnahme Einschleusstellen, Ausschleusstellen, Kreuzungen und Umlenkstellen sowie Ein- und Auslagerstellen der Fördergüter auf den fördertechnischen Komponenten beinhaltet.

Wenn die Bildsensoren IP-Kameras sind, die derart angeordnet sind, dass ihr Sichtfeld die Bildaufnahme von Einschleusstellen, Ausschleusstellen, Kreuzungen und Umlenkstellen sowie Einlagerstellen und Auslagerstellen der Fördergüter auf den fördertechnischen Komponenten umfasst, können die materialflusskritischen Stellen gut überwacht und trotzdem ohne eine hohe Zahl von Bildsensoren gesteuert werden.

Es versteht sich, dass auch je nach Bedarf parallel klassische Sensorik verwendbar bleibt.

Möglich ist es auch, entsprechende Bildsensoren auf Regalbediengeräten etc. im Bereich der Lagerregale des Lagers vorzusehen. So können zusätzlich die Ausrichtung der Objekte bzw. Fördergüter im Regal und die Belegung bestimmt werden. Das Sichtfeld der entsprechenden Bildsensoren kann also auch die Lagerregale umfassen.

Weitere Merkmale und Einzelheiten der Erfindung ergeben sich aus der nachfolgenden Beschreibung der Zeichnung. Es zeigen:
Figur 1 eine schematische Draufsicht eines Fördersystems und eines Regallagers zur Ein- und Auslagerung von Paketen und
Figur 2 ein schematisches Ablaufdiagramm des Steuerverfahrens.

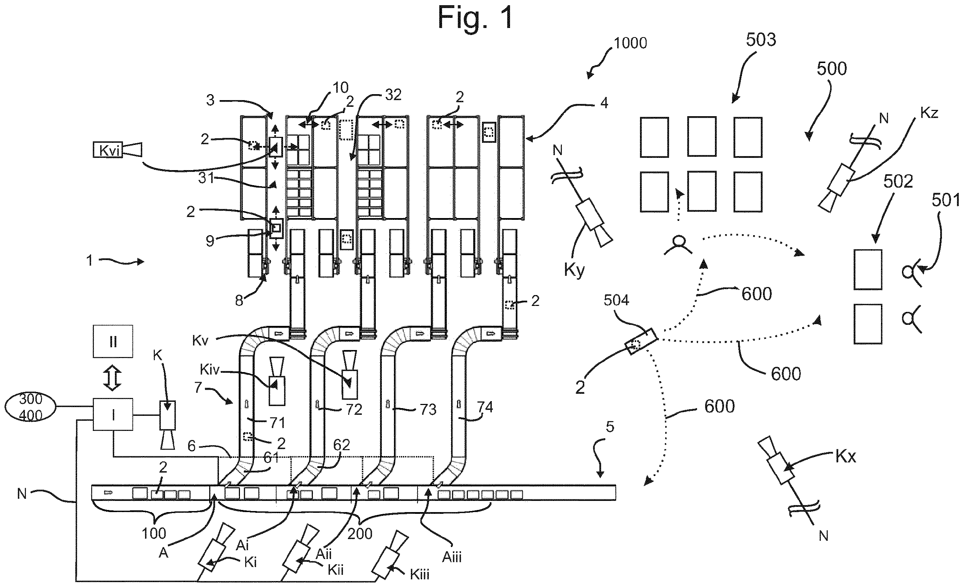

Die Figur 1 zeigt eine Draufsicht auf einen Teil eines Zentrallagers 1000 mit einem Fördersystem 1 zum Einlagern von Paketen 2 in Lagerregalgassen 3, welche durch parallel und einander gegenüberliegend angeordnete Lagerregale 4 mit mehreren Ebenen gebildet werden.

Das Fördersystem 1 umfasst eine Verteilstrecke 5, die Pakete 2 an- bzw. abfördert. Zwischen der Verteilstrecke 5 und den Lagerregalen 4 sind Ein- bzw. Auslagerstrecken 7 angeordnet. Diese sind durch Ein- bzw. Ausschleusungen 6 mit der Verteilstrecke 5 und über Warenlifte 10 mit Lagerregalgassen 3 verbunden. Benachbarte Ein-/Auslagerstrecken 71 und 72, 73 ... sind jeweils parallel angeordnet.

Die Pakete 2 werden durch die Warenlifte 8 von den Einlagerstrecken 7 in die Regalebenen der Lagerregale 4 bzw. von den Regalebenen auf die Auslagerstrecken 7 transportiert. Ein Transport der Pakete 2 innerhalb der Regalebenen der Lagerregale 4 erfolgt über Regalbediengeräte 9.

Hierbei bewegt sich vorzugsweise jeweils ein Regalbediengerät 9, beispielsweise ein Shuttle-Fahrzeug, auf jeder Regalebene. Das Regalbediengerät 9 ist mit Lastaufnahmemitteln, beispielsweise Teleskoparmen, ausgestattet, welche einen Transfer auf eine Transportfläche des Regalbediengeräts 9 hinauf oder von einer Transportfläche eines Regalbediengeräts 9 hinab ermöglichen.

Nachfolgend wird das Verfahren im Falle der Einlagerung von Paketen 2 anhand der Figur 1 erläutert.

Im Bereich der Zuführung 100 werden von einer IP-Kamera K in kurzen Intervallen Bilder von der Verteilstrecke 5 aufgenommen, auf der beispielhaft ein Paket 2 bewegt wird.

Die Bilddaten von der IP-Kamera K werden über ein Netzwerk N an einen Rechner I übermittelt und aufbereitet und so verarbeitet, dass sie in einem Bilderkennungsmodul 300 für eine nachgelagerte Identifikation und Positionsbestimmung 400 der auf der Verteilstrecke 5 sich befindenden Fördergüter bzw. des Pakets 2 verwendet werden können.

In dem Rechner I ist zudem ein Echtzeitmodell des Lagers 1000 inklusive der fördertechnischen Anlage 1 virtualisiert, wofür ein virtuelles Modell der realen fördertechnischen Anlage 1 mit den Abmessungen der einzelnen fördertechnischen Komponenten und deren Bewegungsparametern einschließlich der Aktoreneigenschaften hinterlegt ist.

Dieses Modell wird laufend mit den aktuellen Informationen aus der der Bilderkennung 300 nachgelagerten Identifikation und Positionsbestimmung 400 der erkannten Fördergüter aktualisiert.

Dazu sind an geeigneten Stellen weitere IP-Kameras Ki, ii, iii usw. angeordnet, deren Bilddaten ebenfalls in das virtuelle Modell einfließen.

Die Kameras K sind allesamt über Power-over-Ethernet -Verbindungen N mit dem Rechner I über bekannte Netzwerktechnik verbunden.

Das virtuelle Modell kann die reale fördertechnische Anlage 1 mit Hilfe des virtualisierten Echtzeit-Modells zentral steuern, wozu auch Informationen mit der übergeordneten Lagerverwaltungssteuerung II über geeignete Schnittstellen zur Berücksichtigung des Routings und Zielvorgaben der Auftragsabarbeitung einfließen.

Daraus erzeugt der Rechner I Materialflusssteuerungsbefehle für die realen Aktoren A, Ai, Aii, Aiii etc. zur Steuerung der Förderbewegung der jeweiligen Fördergüter bzw. Pakete 2 auf der Verteilstrecke 5 und auch zu deren Einlagerung, Lagerung, Auslagerung, ggf. Sortierung und Förderung zur Auftragsabarbeitung.

Im vorliegenden Fall wird daher der Aktor 6 des Ausschleusers 6 für das im Bereich der Zuführung 100 erkannte Paket 2 entsprechend dessen Geschwindigkeit so angesteuert, dass das Paket 2 auf die Ausschleusung 61 und somit auf die Strecke 71 gelangt.

Der als Schieber ausgebildete Aktor Ader Ausschleusung 6 wird also vom Rechner I anhand des virtualisierten Echtzeit-Modells anhand der Kameradaten so gesteuert, dass das Paket 2 ausgeschleust wird.

Es versteht sich, dass der Rechner I bzw. die darin laufende Steuerung anhand des virtualisierten Echtzeit-Modells auch die als Rollenförderer ausgebildete Verteilstrecke 5 steuert.

Ein Paket 2 wird also auf der Verteilstrecke 5 zur Einlagerung gefördert und nach Passieren einer Ausschleusung 61 gelangt es über die Einlagerstrecke 71 zu dem Warenlift 8. Von dem Warenlift 8 wird das Paket 2 von einem Regalbediengerät 9 übernommen und so in eine Zielregalgasse 31 bzw. entsprechendes Lagerregal der Gasse eingelagert.

Auf dem Regalbediengerät 9 ist ebenfalls eine Kamera Kvi vorgesehen, die Bilder von dem Regal 4 während der Fahrt aufnimmt und so eine Echtzeitaufnahme der Belegung und Ausrichtung der Pakete im Regal ermöglicht.

Hierbei werden keine Lichtschranken oder sonstige Sensoren benötigt. Die Steuerung des Materialflusses des Pakets 2 erfolgt allein mittels des aus den Kameras K gewonnenen Bilddaten und den daraus identifizierten Paketen und deren Position bzw. Geschwindigkeit.

Es können jedoch auch klassische Sensoren wie Lichtschranken oder Lichttaster zusätzlich oder streckenweise eingesetzt werden, um z. B. herkömmliche Module zu kombinieren.

Das Verteilzentrum 1000 umfasst auch einen Bereich 500 in dem Personen 501 tätig sind, die z. B. an manuellen Kommissionierstationen 502 arbeiten, manuelle Ein- und Auslagerung von Sonderwaren in einem extra Lagerbereich 503 durchführen, Retouren bearbeiten oder auch Anlagenwartung durchführen.

Daneben sind im Verteilzentrum 1000 auch autonome Fahrzeuge 504 (AGV) unterwegs, die zwischen Übergabestellen der Verteilstrecke 5 und dem Bereich 500 Waren bzw. Pakete 2 austauschen.

Da sich somit die Bewegungspfade 600 der autonomen Fahrzeuge 504 und der Personen 201 überlappen, besteht die Gefahr von Kollisionen.

Im Bereich 500 werden (analog der obigen Beschreibung) von entsprechend platzierten IP-Kameras Kx,y,z in kurzen Intervallen Bilder aufgenommen, auf der die Personen 501 und AGV 504 abgebildet sind.

Die Bilddaten von den IP-Kameras Kx,y,z werden wiederum über das Netzwerk N an den Rechner I übermittelt und aufbereitet und so verarbeitet, dass sie in dem Bilderkennungsmodul 300 für eine Bilderkennung und nachgelagerte Identifikation und Positionsbestimmung und Bewegungsnachverfolgung der erkannten automatisierten Maschinen 504 und Personen 501 verwendet werden können.

In dem Rechner I sind dazu in dem Echtzeitmodell des Lagers 1000 Abmessungen und Bewegungsparameter einschließlich der Aktoreneigenschaften der Personen 501 und AGV 504 hinterlegt.

Dieses Modell wird laufend mit den aktuellen Informationen aus der der Bilderkennung 300 nachgelagerten Identifikation und Positionsbestimmung und Bewegungsnachverfolgung 400 der erkannten Personen 501 und AGV 504 aktualisiert.

Das virtuelle Modell kann das reale Lager 1000 inkl. der AGV 504 mit Hilfe des virtualisierten Echtzeit-Modells zentral steuern, wozu auch Informationen mit der übergeordneten Lagerverwaltungssteuerung II über geeignete Schnittstellen zur Berücksichtigung des Routings und Zielvorgaben der Auftragsabarbeitung für die AGV 504 einfließen.

Daraus erzeugt der Rechner I Materialflusssteuerungsbefehle für die realen Aktoren A, Ai, Aii, Aiii etc. zur Steuerung der Bewegung der jeweiligen AGV 504 im Bereich 500 unter Berücksichtigung notwendiger Pfade 300.

Dabei werden aus den Bewegungsdaten Gefährdungspotentiale bestimmt und bei Feststellen einer Personengefährdung werden Steuerungsbefehle für die AGV 504 erzeugt, die die Gefährdung beseitigen. Dies können einfache Stillstand-Befehle zum sofortigen Stopp oder auch Ausweich-Befehle zum Umfahren des Gefährdungsbereichs sein. Auch eine Langsamfahrt könnte eingeleitet werden. Es werden also die realen Aktoren (Antriebe, Lenkung etc.) zur Steuerung der Förderbewegung der jeweiligen automatisierten Maschinen 504 verändert.

Analog werden die Bewegungen der Regalbediengeräte 9 überwacht und bei Gefährdung von Wartungspersonal entsprechende Steuerungsbefehle erzeugt.

Dementsprechend können auch bewegliche Komponenten der Kommissionierstationen 502 auf eine Gefährdung des Personals 501 hin überwacht und gezielt gesteuert bzw. gestoppt werden.

Es wird also insgesamt eine neue Qualität der Sicherheit im gesamten Lager 1000 erreicht, da bedarfsgerecht ohne unnötige Verlangsamung oder Stillstand optimierte Sicherheitsbedingungen im gemischten Betrieb ohne gesonderte (z. B. durch Zäune abgeschottete) Sicherheitszonen für Automatikbereiche durch die bilddatengestützte Überwachung und Steuerung möglich werden.

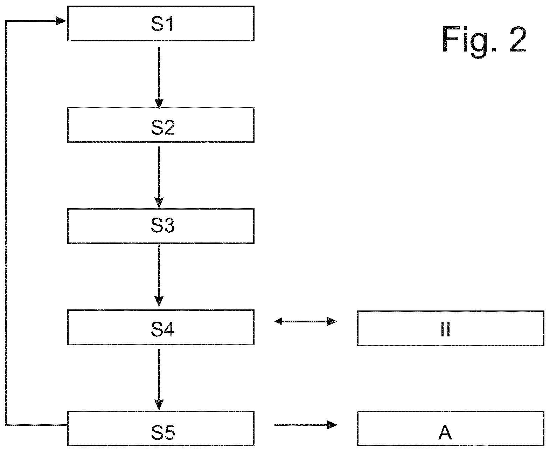

Nachfolgend wird der Ablauf der Steuerung nochmals anhand von Figur 2 erläutert.

Wie erwähnt werden von den IP-Kameras K, Ki, Kii...Kx,y,z laufend Bilddaten aufgenommen (Schritt S1) und die Daten von den IP-Kameras K, Ki, Kii... Kx,y,z über das Netzwerk N an den Rechner I übermittelt (Schritt S2).

Im Rechner I werden in den Modulen 300 und 400 aus den Bilddaten eine Identifikation und Positionsbestimmung der Fördergüter durchgeführt (Schritt S3).

Die Identifikation erfolgt durch eine Bilderkennung im Modul 300 anhand der Fördergüterabmessungen und äußeren Merkmale. Durch Kommunikation mit der Lagerverwaltungssteuerung II stehen Informationen über die erwarteten Pakete und deren Eigenschaften zur Verfügung, um die Identifikation zu erleichtern bzw. zu bestätigen. So kann auch die jeweilige Ausrichtung erkannt und ggf. eine Änderung von der Steuerung veranlasst werden.

Die nachgelagerte Positionsbestimmung im Modul 400 erfolgt anhand des bekannten Standorts der Kamera K, die die jeweiligen Bilddaten liefert und der aus Differenzbildern errechneten Geschwindigkeit etc.

Im Rechner I werden in den Modulen 300 und 400 aus den Bilddaten auch eine Identifikation und Positionsbestimmung sowie Bewegungsnachverfolgung der erkannten automatisierten Maschinen 9, 504 und Personen 501 durchgeführt (Schritt S3).

Die Identifikation erfolgt durch eine Bilderkennung im Modul 300 anhand der bekannten Standorte der Kameras und äußeren Merkmale der automatisierten Maschinen 9, 504 und Personen 501, wozu diese ggf. zur Erleichterung gekennzeichnet sind.

Durch Kommunikation mit der Lagerverwaltungssteuerung II stehen Informationen über die erwarteten Positionen zur Verfügung, um die Identifikation zu erleichtern bzw. zu bestätigen.

Die nachgelagerte Positionsbestimmung und Bewegungsnachverfolgung im Modul 400 erfolgt anhand des bekannten Standorts der jeweiligen Kamera K, die die jeweiligen Bilddaten liefert und der aus Differenzbildern errechneten Geschwindigkeit etc. So kann auch die jeweilige Bewegung der automatisierten Maschinen 9, 504 erkannt und ggf. eine Änderung von der Steuerung veranlasst werden.

Mit diesen aktuellen Daten wird das im Rechner I virtualisierte Echtzeit-Modell laufend aktualisiert, so dass jederzeit bekannt ist, wo sich die automatisierten Maschinen, Personen und Fördergüter im System befinden und wie sie sich gerade bewegen.

Um Steuerungsbefehle für die fördertechnische Anlage daraus zu berechnen, fließen noch Daten von der Lagerverwaltungssteuerung II über geeignete Schnittstellen zur Berücksichtigung des Routings und Zielvorgaben der Auftragsabarbeitung ein.

Aus diesen Informationen werden dann die Steuerungsbefehle für die jeweiligen Aktoren berechnet und an die Aktoren übermittelt (Schritt S5), wobei Gefährdungspotentiale berücksichtigt werden und bei Feststellen einer Personengefährdung die Steuerungsbefehle für Aktoren der automatisierten Maschinen so abgeändert werden, dass die Gefährdung beseitigt oder vorrausschauend verhindert wird.

Anschließend beginnt der Ablauf von Neuem.

## Patentansprüche

1. Verfahren zur Steuerung eines realen Lagers, das fördertechnische Anlagen, automatisierte Maschinen und Personen umfasst,
wozu in einem zentralen Rechner das reale Lager einschließlich fördertechnischen Anlagen, automatisierten Maschinen und der Personen virtualisiert wird, wofür ein virtuelles Modell des Lagers inklusive der realen fördertechnischen Anlage, der automatisierten Maschinen und der Personen mit deren Abmessungen und deren Bewegungsparametern einschließlich der Aktoreneigenschaften hinterlegt ist,
von den zu fördernden Objekten, automatisierten Maschinen und Personen in der fördertechnischen Anlage mittels Sensoren Bilder in vorgegebenen kurzen Zeitintervallen erfasst werden,
aus den erfassten Bildern in dem zentralen Rechner mittels Bilderkennung die zu fördernden Objekte, automatisierten Maschinen und Personen identifiziert und deren Position zum Zeitpunkt der Bilderfassung in dem realen Lager bestimmt werden,
und das virtuelle Modell laufend mit der Identifikation und Positionsbestimmung der Objekte in dem zentralen Rechner aktualisiert wird, so dass daraus ein virtualisiertes Echtzeit-Modell erzeugt wird, und die reale fördertechnische Anlage und/oder die automatisierten Maschinen mit Hilfe des virtualisierten Echtzeit-Modells zentral gesteuert werden, wobei eine Erzeugung von Materialflusssteuerungsbefehlen für die realen Aktoren zur Steuerung der Förderbewegung der jeweiligen fördertechnischen Anlagen und/oder automatisierten Maschinen erfolgt, um eine Gefährdung der Personen auszuschließen.

2. Verfahren nach Anspruch 1, **dadurch gekennzeichnet, dass** als Sensoren Kameras eingesetzt werden.

3. Verfahren nach Anspruch 2, **dadurch gekennzeichnet, dass** die Kameras ihre erfassten Bilder an den Rechner per IP Netzwerk übermitteln.

4. Verfahren nach einem der vorhergehenden Ansprüche, **dadurch gekennzeichnet, dass** der zentrale Rechner ein Modul oder mehrere verschiedene Module aufweist:
- Schnittstelle zu den Bildsensoren zur Entgegennahme der Bilddaten;
- Aufbereitung und Verarbeitung der Bilddaten;
- Bilderkennung und nachgelagerte Identifikation und Positionsbestimmung und Bewegungsnachverfolgung der erkannten automatisierten Maschinen und/oder Personen;
- Virtualisiertes Echtzeitmodell des realen Lagers mit aktuellen Informationen aus der der Bilderkennung nachgelagerten Identifikation und Positionsbestimmung und Bewegungsnachverfolgung der erkannten automatisierten Maschinen und/oder Personen;
- Schnittstelle zu einem Lagerverwaltungsrechner zur Berücksichtigung der Informationen zu den automatisierten Maschinen und/oder Personen;
- Erzeugung von Materialflusssteuerungsbefehlen für die realen Aktoren zur Steuerung der Förderbewegung der jeweiligen automatisierten Maschinen, um eine Gefährdung der Personen auszuschließen.

5. Verfahren nach einem der vorhergehenden Ansprüche, **dadurch gekennzeichnet, dass** die Sensoren zur Bildaufnahme derart im Lager angeordnet sind, dass das Sichtfeld der Bildaufnahme gemeinsam von Personen und automatisierten Maschinen genutzte Bereiche beinhaltet.

6. Verfahren nach einem der vorhergehenden Ansprüche, **dadurch gekennzeichnet, dass** der zentrale Rechner ein Modul oder mehrere verschiedene Module aufweist:
- Schnittstelle zu den Bildsensoren zur Entgegennahme der Bilddaten;
- Aufbereitung und Verarbeitung der Bilddaten;
- Bilderkennung und nachgelagerte Identifikation und Positionsbestimmung der erkannten Fördergüter;
- Virtualisiertes Echtzeitmodell des realen Lagers mit aktuellen Informationen aus der der Bilderkennung nachgelagerten Identifikation und Positionsbestimmung der erkannten Fördergüter;
- Schnittstelle zu einem Lagerverwaltungsrechner zur Berücksichtigung des Routings und Zielvorgaben der Auftragsabarbeitung und Austausch von Informationen zu den Objekten bzw. Fördergütern;
- Erzeugung von Materialflusssteuerungsbefehlen für die realen Aktoren zur Steuerung der Förderbewegung der jeweiligen Fördergüter zu deren Einlagerung, Lagerung, Auslagerung, ggf. Sortierung und Förderung zur Auftragsabarbeitung.

7. Verfahren nach einem der vorhergehenden Ansprüche, **dadurch gekennzeichnet, dass** die Sensoren zur Bildaufnahme derart im Lager angeordnet sind, dass das Sichtfeld der Bildaufnahme Einschleusstellen, Ausschleusstellen, Kreuzungen und Umlenkstellen der Fördergüter auf den fördertechnischen Komponenten sowie der Lagerregale beinhaltet.

## Claims

1. Method for controlling a real warehouse which comprises conveyor installations, automated machines and persons,
for which purpose the real warehouse, including conveyor installations, automated machines and persons, is virtualised in a central computer, for which purpose a virtual model of the warehouse, including the real conveyor installation, the automated machines and the persons with their dimensions and movement parameters, including the actuator properties, is stored,
images of the objects to be conveyed, automated machines and persons in the conveyor installation are captured by means of sensors at predefined short time intervals,
the objects to be conveyed, automated machines and persons are identified from the captured images in the central computer by means of image recognition and the positions thereof in the real warehouse at the time of image capture are determined, and the virtual model is continuously updated with the identification and position determination of the objects in the central computer such that a virtualised real-time model is generated therefrom and the real conveyor installation and/or the automated machines are centrally controlled with the aid of the virtualised real-time model, wherein material flow control commands are generated for the real actuators for controlling the conveying movement of the respective conveyor installations and/or automated machines in order to avoid endangering the persons.

2. Method as claimed in claim 1, **characterised in that** cameras are used as sensors.

3. Method as claimed in claim 2, **characterised in that** the cameras communicate their captured images to the computer via an IP network.

4. Method as claimed in any one of the preceding claims, **characterised in that** the central computer comprises one module or a plurality of different modules:
- interface to the image sensors for receiving the image data;
- preparing and processing the image data;
- image recognition and downstream identification and position determination and movement tracking of the recognised automated machines and/or persons;
- virtualised real-time model of the real warehouse with current information from the identification and position determination and movement tracking of the recognised automated machines and/or persons, downstream of the image recognition;
- interface to a warehouse management computer in order to take into account the information relating to the automated machines and/or persons;
- generation of material flow control commands for the real actuators for controlling the conveying movement of the respective automated machines in order to avoid endangering the persons.

5. Method as claimed in any one of the preceding claims, **characterised in that** the sensors for image recording are arranged in the warehouse such that the view field of the image recording includes areas used jointly by persons and automated machines.

6. Method as claimed in any one of the preceding claims, **characterised in that** the central computer comprises one module or a plurality of different modules:
- interface to the image sensors for receiving the image data;
- preparation and processing of the image data;
- image recognition and downstream identification and position determination of the recognised goods being conveyed;
- virtualised real-time model of the real warehouse with current information from the identification and position determination of the recognised goods being conveyed, downstream of the image recognition;
- interface to a warehouse management computer in order to take into account the routing and objectives of the order processing and exchange of information relating to the objects or goods being conveyed;
- generation of material flow control commands for the real actuators for controlling the conveying movement of the respective goods being conveyed for placement into storage, storage, removal from storage, optionally sorting and conveyance thereof for order processing;

7. Method as claimed in any one of the preceding claims, **characterised in that** the sensors for taking images are arranged in the warehouse such that the view field of the image taking includes introducing points, discharging points, crossings and diversion points of the goods being conveyed on the conveyor components and the storage racks.

## Revendications

1. Procédé de commande d'un entrepôt réel qui comprend des installations de convoyage, des machines automatisées et des personnes,
l'entrepôt réel qui inclut des installations de convoyage, des machines automatisées et des personnes étant pour cela virtualisé dans un ordinateur central, un modèle virtuel de l'entrepôt qui inclut l'installation de convoyage réel, les machines automatisées et les personnes étant pour cela mémorisé avec les dimensions et les paramètres de mouvement de ceux-ci, y compris les propriétés d'actionneurs, des images des objets à transporter, des machines automatisées et des personnes dans l'installation de convoyage étant capturées au moyen de capteurs à des intervalles de temps courts spécifiés,
les objets à transporter, les machines automatisées et les personnes étant identifiés à partir des images capturées dans l'ordinateur central à l'aide d'une reconnaissance d'image et leur position au moment de la capture d'image étant déterminée dans l'entrepôt réel et le modèle virtuel étant actualisé dans l'ordinateur central en continu avec l'identification et la détermination de position des objets de façon à générer à partir de là un modèle en temps réel virtualisé et à commander de manière centralisée l'installation de convoyage réel et/ou les machines automatisées à l'aide du modèle en temps réel virtualisé, une génération des instructions de commande de flux de matière pour les actionneurs réels étant effectuée afin de commander le mouvement de transport des installation de convoyage respectifs et/ou des machines automatisées respectives pour éviter que les personnes ne soient mises en danger.

2. Procédé selon la revendication 1, **caractérisé en ce que** des caméras sont utilisées comme capteurs.

3. Procédé selon la revendication 2, **caractérisé en ce que** les caméras transmettent leurs images capturées à l'ordinateur par le biais d'un réseau IP.

4. Procédé selon l'une des revendications précédentes, **caractérisé en ce que** l'ordinateur central comporte un module ou plusieurs modules différents destinés à:
- réaliser une interface avec les capteurs d'image pour recevoir les données d'image;
- préparer et traiter des données d'image;
- effectuer une reconnaissance d'images et en aval une identification et une détermination de position et un suivi des mouvements des machines automatisées et/ou des personnes détectées;
- réaliser un modèle en temps réel virtualisé de l'entrepôt réel avec des informations actuelles provenant, en aval de la reconnaissance d'image, de l'identification et de la détermination de position et du suivi des mouvements des machines automatisées et/ou des personnes détectées;
- réaliser une interface avec un ordinateur de gestion d'entrepôt pour prendre en compte les informations sur les machines automatisées et/ou les personnes;
- générer des instructions de commandes de flux de matière pour les actionneurs réels afin de commander le mouvement de convoyage des machines automatisées respectives pour éviter que les personnes ne soient mises en danger.

5. Procédé selon l'une des revendications précédentes, **caractérisé en ce que** les capteurs destinés à la capture d'images sont disposés dans l'entrepôt de manière à ce que le champ de vision de la capture d'images contienne des zones utilisées en commun par des personnes et des machines automatisées.

6. Procédé selon l'une des revendications précédentes, **caractérisé en ce que** l'ordinateur central comporte un module ou plusieurs modules différents destinés à:
- réaliser une interface avec les capteurs d'image pour recevoir les données d'image;
- préparer et traiter les données d'image;
- effectuer une reconnaissance d'image et en aval une identification et une détermination de position des articles transportées détectées;
- réaliser un modèle en temps réel virtualisé de l'entrepôt réel avec des informations actuelles provenant, en aval de la reconnaissance d'image, de l'identification et de la détermination de position des articles transportées détectées;
- réaliser une interface avec un ordinateur de gestion d'entrepôt pour prendre en compte l'acheminement et les objectifs de traitement de commandes et échanger des informations sur les objets ou articles transportés;
- générer des instructions de commande de flux de matière pour les actionneurs réels afin de commander le mouvement de transport des articles transportés respectifs afin de les emmagasiner, stocker, déstocker, si nécessaire trier et transporter en vue du traitement de commandes.

7. Procédé selon l'une des revendications précédentes, **caractérisé en ce que** les capteurs destinés à la capture d'images sont disposés dans l'entrepôt de telle sorte que le champ de vision de la capture d'images contiennent des points d'entrée, des points de sortie, des croisements et des points de déviation des articles transportés sur les composants de convoyage et les rayonnages d'entrepôt.
